Europäisches Patentamt

European Patent Office

Office européen des brevets

(19)

(11) Publication number: **0 145 501**
**B1**

(12) **EUROPEAN PATENT SPECIFICATION**

(45) Date of publication of patent specification: **04.10.89**

(51) Int. Cl.⁴: **B 29 D 29/08**

(21) Application number: **84308739.6**

(22) Date of filing: **14.12.84**

(54) Method of and apparatus for the manufacture of long cogged power transmission belts.

(30) Priority: **15.12.83 JP 237639/83**

(43) Date of publication of application:
**19.06.85 Bulletin 85/25**

(45) Publication of the grant of the patent:
**04.10.89 Bulletin 89/40**

(84) Designated Contracting States:
**AT DE GB**

(56) References cited:
**DE-A-3 206 160**
**US-A-4 359 355**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Fujita, Kunihiro**
**No. 1-16, Marubashi-cho**
**Nishinomiya-shi Hyogo (JP)**
Inventor: **Tanaka, Hideaki**
**No. 1-20-404, 6 chome Takakuradai**
**Suma-ku Kobe (JP)**
Inventor: **Maebara, Toshiaki**
**No. 1134-2, Taraga-cho**
**Kasugai-shi Aichi (JP)**

(74) Representative: **Jones, Michael Raymond et al**
**HASELTINE LAKE & CO. Hazlitt House 28**
**Southampton Buildings Chancery Lane**
**London WC2A 1AT (GB)**

Courier Press, Leamington Spa, England.

## Description

Technical Field

This invention relates to manufacture of power transmission belts and in particular to the manufacture of relatively long cogged power transmission belts according to the preamble of the independent claims 1 and 18 and to an apparatus for forming such cogged belt structure according to the preamble of claim 20.

Background Art

One conventional method of manufacture of a continuous cogged power transmission belt, such as a V-belt, comprises forming a cylindrical mandrel with suitable grooves and them forming, in situ, about the mandrel a continuous loop of belt forming material which may be laid up in layers in the conventional manner. In one such manufacture, a preformed pattern is wrapped about the mandrel, or drum. The structural materials are then in layers about the pattern and a cylindrical sleeve is placed around the layers for final forming of the cogged belt by in situ vulcanization.

It is conventional in practicing such manufacture to utilize an elongated cog pattern which is cut to size and wrapped around the mandrel to form the endless cogged pattern. It has been found difficult, however, to provide accurately precise spacing of the projections of the cogged pattern and particularly such irregularities occur at the join between the two ends of the pattern wrapped about the drum.

Another problem in such manufacture is the difficultly of utilization thereof where relatively long lengths of belts are required, as the drum construction becomes excessively large and the vulcanizing process is quite difficult.

Another known manufacture of such cogged belts comprises progressive forming of the belt by utilizing platelike cogged molds. The molds are utilized in conjunction with a continuous vulcanizable belt preform element and progressively are associated with successive portions of the belt preform until the entire length of the belt preform is provided with the desired cogged teeth. A problem arises, however, in this manufacturing technique in that the final portion of the belt preform does not, in almost all cases, constitute an accurate multiple of the desired cog pitch and, thus, fractional teeth are formed, so that the belt tends to deform or break at this portion. This is particularly vexatious problem where relatively long belts are to be manufactured, as cumulative errors in the successive cog-forming steps may be readily occur.

In US-A-4359355, which discloses the features of the pre-characterizing parts of the independent claims, there is disclosed a method for forming a molded notch elastomeric endless power transmission belt in stepwise manner, comprising forming a plurality of uncured belt segments individually having a load carrying section sandwiched between a tension and a compression section; adjacently disposing the belt segments, and interconnecting the belt segments with a tie band to form a belt preform; disposing the belt preform between juxtaposed portions of an open-ended mold having rigid continuously curved transverse notches and rigid longitudinally ribs separating the belt segments, and pressing the mold portions against the belt preform and heating to cure a section of the belt with notches mold formed in the compression section of adjacent belt segments; and advancing the belt preform successively to dispose an uncured section of the belt between the mold portions such that at least one notch mold formed from a previously cured belt section registers in a transverse mold notch, repeating this step as necessary until the belt is cured along its full perimeter. The final unformed section is, if necessary, stretched to define a continuous series of substantially uniformly spaced cogs along the entire length of the belt and then formed and vulcanized.

Disclosure of the Invention

The present invention comprehends an improved method of manufacture of such relatively long cogged belts wherein a novel method of assuring accurate formation of the final cogged teeth is provided.

The invention further comprehends such an improved method of manufacture of cogged power transmission belts wherein the final portion of the belt to be formed with teeth is caused to have a length less than the final length and that belt portion is stretched prior to the forming of the final cog teeth therein so as to have a length accurately corresponding to the pitch multiple necessary to provide completely formed teeth at both ends of the final portion of the belt.

According to the present invention, there is provided a method of forming a cogged belt structure comprising the steps of:

(a) extending a continuous looped vulcanizable belt preform element about a pair of axially parallel spaced support members;

(b) press-forming a first preselected length portion of the element disposed between a pair of press-forming members to form a first longitudinally extending series of cogs therein;

(c) vulcanizing the press-formed portion;

(d) advancing the belt to bring a second, similar length portion of the element extending from said first portion to between said press-forming members;

(e) press-forming said second length portion to form a second longitudinally extending series of cogs therein continuing from said first series;

(f) vulcanizing the second press-formed portion; and

(g) repeating steps (d), (e) and (f) if necessary until a final unformed portion of the belt extending from the last formed series of cogs and disposed between said support members has a length of approximately 60 to 85% of said preselected length;

characterized by the additional steps of:

(h) clamping the trailing end cogs of said last formed series of cogs;

(i) longitudinally stretching said final unformed portion in a direction away from the clamped cogs to cause the cumulative length of the clamped trailing end cogs, the final unformed portion, and a preselected number of cogs adjacent the trailing end of said final deformed portion to have a length substantially equal to said preselected length;

(j) press-forming said stretched final unformed portion to form a final longitudinally extending series of cogs therein to define a continuous series of substantially uniformly spaced cogs along the entire length of said looped element;

(k) vulcanizing the said final series of cogs; and

(l) causing the cogs at the opposite ends of each of the series of cogs formed prior to the forming of the final formed series to be only partially vulcanized during the vulcanization of that series and to have vulcanization thereof completed as an incident of subsequent vulcanization of the series of press-formed cogs adjacent thereto.

The present invention also provides a method of forming a cogged belt structure comprising the steps of:

(a) extending a continuous looped vulcanizable belt preform element about a pair of axially parallel spaced support members;

(b) press-forming a first preselected length portion of the element disposed between a pair of press-forming members to form a first longitudinally extending series of cogs therein;

(c) vulcanizing the press-formed portion;

(d) advancing the belt to bring a second, similar length portion of the element extending from said first portion to between said press-forming members;

(e) press-forming said second length portion to form a second longitudinally extending series of cogs therein continuing from said first series;

(f) vulcanizing the second press-formed portion;

(g) repeating steps (d), (e) and (f) if necessary until a final unformed portion of the belt extending from the last formed series of cogs and disposed between said support members has a length of less than said preselected length;

characterized by the additional steps of:

(h) clamping the trailing end cogs of said last formed series of cogs;

(i) longitudinally stretching said final unformed portion in a direction away from the clamped cogs to cause the cumulative length of the clamped trailing end cogs, the final unformed portion, and a preselected number of cogs adjacent the trailing end of said final deformed portion to have a length substantially equal to said preselected length;

(j) press-forming said stretched final unformed portion to form a final longitudinally extending series of cogs therein to define a continuous series of substantially uniformly spaced cogs along the entire length of said looped element; and

(k) vulcanizing the said final series of cogs, said steps of press-forming comprising providing a pair of mold plates for press-forming of the element portions by compression of the portions seriatim therebetween, one of the mold plates being formed with a series of grooves to define one surface of said element said series of cogs and the other of the mold plates having a length less than said one mold plate whereby an end portion of the adjacent series of cogs may be received in the grooves outboard of said other mold plate during the press-forming and vulcanization of the series of cogs in the portion between the molds, said mold plate having a cooled portion at the opposite ends thereof, said cooled portion having a preselected length, the face of said other mold plate being beveled at the longitudinally opposite ends thereof for preventing formation of a stepped mark in the surface of said opposite formed cog one surface.

The present invention also provides apparatus for forming a cogged belt structure comprising:

a pair of axially parallel spaced support members about which a continuous looped vulcanizable belt preform element can be extended;

press-forming members for press-forming a first preselected length portion of the element disposed between the support members to form a first longitudinally extending series of cogs therein;

vulcanizing means for vulcanizing the press-formed portion;

means for moving the element to enable said press-forming members to press-form a second similar length portion of the element extending from the first portion and disposed between the support members to form a second longitudinally extending series of cogs therein continuing from the first series, to enable the vulcanizing means to vulcanize the second press-formed portion, and to enable the repeating of the press-forming and vulcanizing steps by the press-forming members and vulcanizing means until a final unformed portion of the belt extending from the last formed series of cogs and disposed between the support members has a length less than the preselected length;

clamping means for clamping a portion of the element having at least one cog at the trailing end of the last formed series to said members for press-forming said element;

means for longitudinally stretching the final unformed portion, characterized in that said means for longitudinally stretching the final unformed portion is a means for longitudinally stretching the final unformed portion away from the clamped cog portion of the element to cause said final unformed portion, a preselected number of previously formed cogs adjacent the opposite end of said final unformed portion, and said clamped cog portion to have a cumulative length substantially equal to said preselected length;

means for causing the press-forming members to press-form the stretched final unformed portion to form a final longitudinally extending series of cogs therein to define a continuous series of substantially uniformly spaced cogs along the entire length of the looped element, and to enable the vulcanizable means to vulcanize the final series of cogs; and

means for reducing the vulcanizing effect of the vulcanizing means at the opposite ends of the press-forming members to permit desired vulcanization of the cogs press-formed by said ends to be completed only by a plurality of successive partial vulcanizations.

Further embodiments of the invention are defined in the dependent claims.

Preferably, the length of the looped element and the preselected length of the final unformed portion are correlated so that the length of the final unformed portion is in the range of approximately 60% to 85% of the preselected length.

The invention uses a pair of mold plates for press-forming the element portions by compression of the portions seriatim there-between.

Means are provided at the opposite ends of the mold plates for engaging the previously formed cogs at the opposite ends of the stretched final unformed portion to maintain its stretch to the preselected length during the final vulcanization step.

The step of stretching the final unformed portions comprises a step of holding the end of the last previously formed series of cogs adjacent the final unformed portion and pulling the element at the opposite end of the final unformed portion away from the held end until the length of the final unformed portion is the desired preselected length.

In carrying out the invention, it is desirable to cause the cogs at opposite ends of each of the series to be only partially vulcanized during the vulcanization of that series.

The vulcanization of the final series causes complete vulcanization of the cogs at the opposite ends thereof by repeating the partial vulcanization of those cogs as the end cogs of the final series.

In the illustrated embodiment, the stretching of the final unformed portion is effected by increasing the spacing between pulleys about which the belt preform is disposed.

In the illustrated embodiment, one of the mold plates is formed with a series of grooves to define a series of cogs, and the other of the mold plates has a length less than the cog mold plate so that an end portion of the adjacent series of cogs may be received in the grooves outboard of the second mold plate during the press-forming and vulcanization operations.

In one embodiment, the face of the noncog-ged mold plate is beveled at the longitudinally opposite ends thereof.

The opposite ends of the mold plates may be provided with cooling means to effect the desired only partial vulcanization of the end cogs of the respective series.

The teeth at the opposite ends of the final series may be clamped to the cogged mold plate after the final portion is stretched to the desired length so as to maintain the desired length of the final portion during the final press-forming and vulcanization steps.

The invention comprehends that the belt preforms may comprise individual V-belt preforms, or a wide preform belt subsequently cut to individual V-belt configurations in the conventional manner, as desired.

The method and apparatus of the present invention are extremely simple and economical while yet providing an improved relatively long cogged belt manufacture wherein the cogged teeth are spaced accurately at the desired pitch at all portions of the belt including the final formed portion in utilizing the progressive mold plate forming technique.

Brief Description of the Drawing

Other features and advantages of the invention will be apparent from the following description taken in connection with the accompanying drawing wherein:

FIGURE 1 is a transverse section of a drum illustrating the forming of a belt preform thereon for use in carrying out the manufacture of the invention;

FIGURE 2 is a fragmentary transverse section of the belt preform;

FIGURE 3 is a schematic diagram illustrating the arrangement of the belt preform and mold plates of the present invention in carrying out a first step in the manufacture of the relatively long cogged belt;

FIGURE 4 is a schematic diagram illustrating a further step in the manufacture wherein the final portion of the belt to be provided with the cogged teeth by the mold plates is stretched to accurately locate the previously formed cogged teeth at the opposite ends thereof so as to provide a continuing series of cog teeth of uniform pitch throughout the length of the belt;

FIGURE 5 is a fragmentary elevation illustrating the disalignment of the previously formed cogged teeth relative to the cogged mold plate prior to the stretching operation;

FIGURE 6 is a fragmentary elevation illustrating the arrangement of the previously formed cogged teeth as a result of the stretching illustrated in Figure 4;

FIGURE 7 is a schematic elevation illustrating a further step in the forming of the cogged belt;

FIGURE 8 is an enlarged transverse section of the mold plates;

FIGURE 9 is an enlarged section illustrating the arrangement of the belt and mold plates immediately prior to the clamping of the end cogs to the cogged mold plate;

FIGURE 10 is a fragmentary perspective view illustrating the step of cutting individual V-belts from the wide belt preform subsequent to the completion of the forming of the cog teeth therein;

FIGURE 11 is a transverse section illustrating a modified form of pressure mold plate;

FIGURE 12 is a fragmentary enlarged longitudinal section thereof;

FIGURE 13 is a fragmentary enlarged longitudinal section illustrating the cause of a shoulder mark in the formed belt structure which is eliminating by the improved structure of Figure 12;

FIGURE 14 is a transverse section of a pair of mold plates for use in practicing the invention where individual V-belts are formed concurrently; and

FIGURE 15 is a fragmentary perspective view of a V-belt manufactured by means of the mold plates of Figure 14.

Best Mode for Carrying Out the Invention

In the illustrative embodiment of the invention as disclosed in the drawing, a belt preform generally designated 10 is formed in situ on a drum 11. A rubber sleeve 12 is firstly placed about the drum. A rubber layer 13 is wrapped about the sleeve 12. The rubber layer may include short, transversely oriented staple reinforcing fibers 14. A lower cushion rubber sheet 15 is wrapped about the first sheet 14, a tensile cord 16 is spirally wrapped about the lower cushion rubber under a preselected tension, an upper cushion rubber sheet 17 is wrapped about the spirally wrapped tensile cord, and an outer core rubber sheet 18 is wrapped about the outer cushion rubber sheet 17. At least one sheet of rubberized elastic duck 19 is wrapped about the outer core rubber sheet 18.

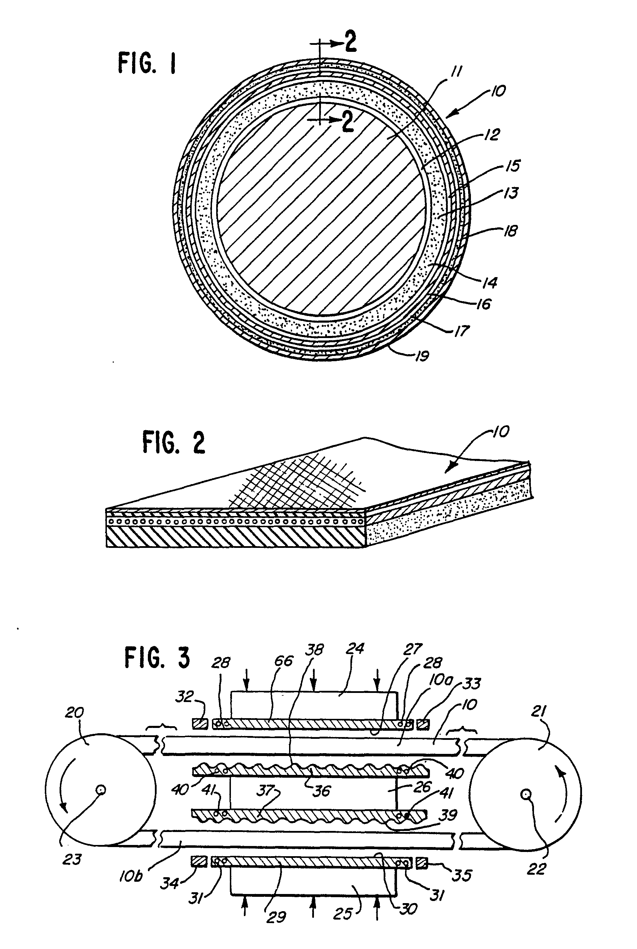

The unvulcanized belt 10 is removed from drum 11 and entrained about a pair of axially parallel spaced pulleys 20 and 21, as seen in Figure 3. In the illustrated embodiment, the axle 22 of pulley 21 is displaceable away from and toward the axle 23 of pulley 20 so as to stretch the belt preform 10, when desired.

The cogged teeth forming means comprises a pair of platen 24 and 25 outwardly of the belt 10 and a platen 26 intermediate the two lengths 10a and 10b of the belt preform extending between the pulleys 20 and 21.

The upper platen 24 carries an outer mold plate 66 having a flat inner surface 27 and cooling means 28 at its opposite ends.

The lower platen 25 carries a similar outer mold plate 29 having a planar inner surface 30 and cooling means 31 at its opposite ends. Outboard of the opposite cooling ends 28 are a pair of clamp plates 32 and 33 and outboard of the opposite ends 31 of mold plate 29 are a corresponding pair of clamp plates 34 and 35.

Inner platen 26 carries a first inner mold plate 36 confronting mold plate 66 and a second inner mold plate 36 confronting mold plate 29. Mold plate 36 defines a serpentinely grooved face 38 and mold plate 37 defines a similarly serpentinely grooved face 39 corresponding to the desired cogged tooth configuration of the final cogged belt to be manufactured.

As shown in Figure 3, mold plate 36 is provided adjacent its opposite ends with cooling means 40 and mold plate 37 is provided adjacent its opposite ends with cooling means 41.

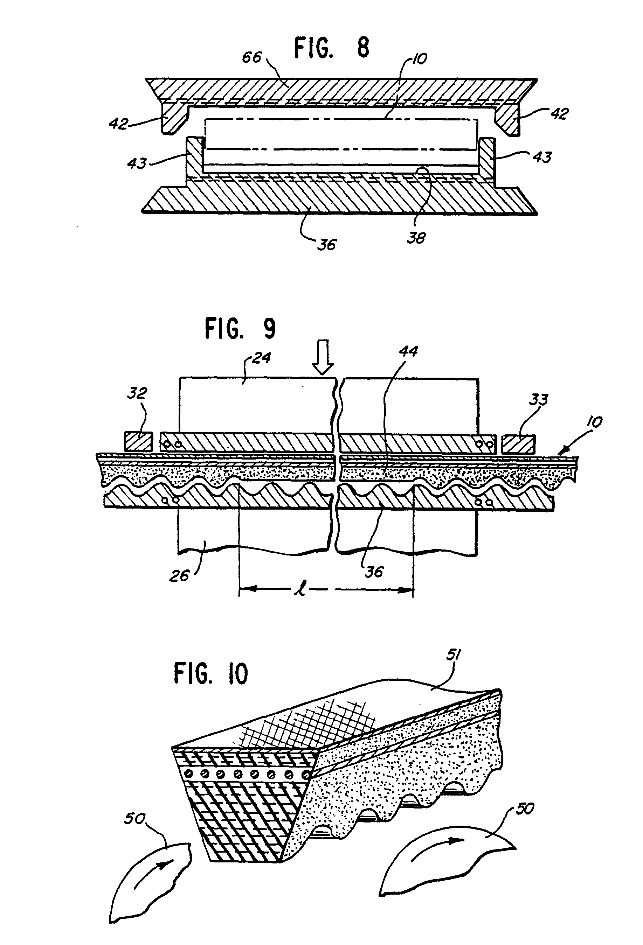

As shown in Figure 8, mold plate 66 may be provided at its opposite edges with downturned flanges 42 embracing corresponding upturned flanges 43 on the groove mold plate 36 for enclosing the preform belt 10 during the molding operation.

The belt preform is provided with a plurality of series of cog teeth by the successive molding of teeth therein between the mold plates in the known manner. Thus, a first set of teeth may be formed in the inner surface of the belt preform by the movement of the mold plate 66 downwardly toward mold plate 36 so as to press-form the desired cog teeth in the inner surface of the belt preform element. Heat may be applied to the platen 24 so as to effect vulcanization of the cog toothed portion so press-formed between the mold plates. The cooling means at the opposite end of the outer mold plate prevents a complete vulcanization of the teeth at the opposite ends of the series.

Upon completion of the vulcanization step, the pulleys are rotated, such as in the direction of the arrows, as seen in Figure 3, so as to bring a next portion of the belt preform into alignment with the mold plates. In this step, the trailing teeth of the first formed series are caused to engage the grooves of the mold 36 in alignment with the cooling means 28 at the lefthand end of the mold plate 66, as seen in Figure 3, so that final vulcanization of the partially vulcanized end teeth of the previous series may be effected during the vulcanization of the next series of teeth between the mold plates 66 and 36.

As will be obvious to those skilled in the art, a concurrent similar formation of cog teeth in the length 10b of the belt preform may be effected concurrently with the above described formation of teeth in the illustrated upper length 10a so that the complete cogged belt may be formed in one-half the time normally required where only a single set of mold plates is utilized.

As indicated above, the invention comprehends means for assuring that the final series of teeth formed between a first formed series of teeth and a last subsequent formed series of teeth will have accurate pitch between each of the cog teeth of the final formed series. To effect such desirable accurate formation of the final cogged teeth, the invention comprehends preselecting the length of the final portion of the belt preform to be less than the length of the desired series. In the illustrated embodiment, the length of the final portion is preselected to be approximately 60% to 85% of the preselected series length. This final portion of the belt preform is then stretched so as to have a length accurately conforming to the preselected series length, permitting the final press-forming and vulcanization steps to form teeth in the final portion of the belt which are accurately of the desired pitch throughout so that the entire belt, when fully vulcanized and formed, will have accurately similar pitch between all teeth thereof.

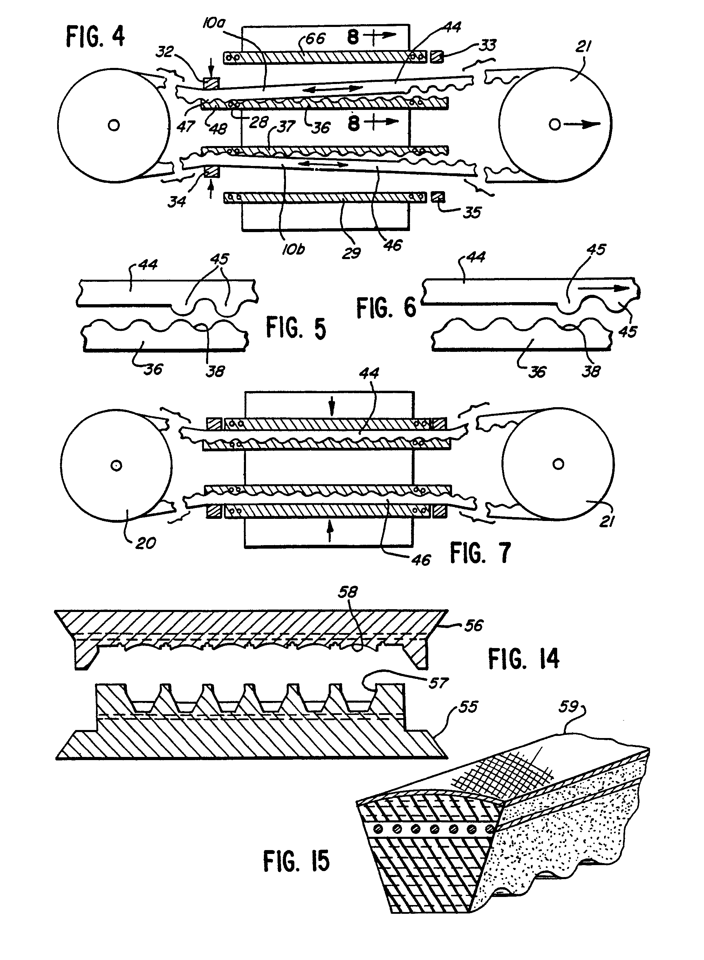

To this end, pulley 21 is caused to be variably spaced from pulley 20 and, in the illustrated embodiment, as indicated above, axle 22 of pulley 21 is displaceable away from axle 23 of pulley 20 by any suitable means, as will be obvious to those skilled in the art, so as to stretch the final unformed portion 44 of the belt, as illustrated in Figure 4, suitably to bring the end teeth 45 thereof from disalignment with the grooved surface 38 of the mold 36, as seen in Figure 5, to alignment therewith, as seen in Figure 6. At the same time, a similar stretching of the final unformed portion 46 of the belt portion 10b is effected so that each of the final unformed portions 44 and 46 is concurrently made to have a length accurately corresponding to the desired length of the series of cog teeth formed by the mold plates 36 and 37, respectively.

The alignment of Figure 6 may be determined visually or by any suitable sensing means, as will be obvious to those skilled in the art.

More specifically, as seen in Figure 4, in effecting the stretching of the belt portion 44 by the translated pulley 21, the toothed portion 47 of the last formed series of teeth is clamped to the end portion 48 of the mold 36 by the clamping means 32 outboard of the cooling means 28. As will be obvious to those skilled in the art, a reversely similar clamping of the leading teeth of the first series of teeth produced by mold 36 may be clamped by the clamp 34 at the lefthand end of mold plate 37, as seen in Figure 4.

When the end teeth of the previously formed series are aligned with the end grooves, as illustrated in Figure 6, the opposite clamping plates 33 associated with mold plate 36 and 35 associated with mold plate 37, may be brought toward the end portion of the mold plates 36 and 37, respectively, to clamp the aligned previously formed teeth to the ends of the mold plates 36 and 37, thereby maintaining the length of the final unformed portion of the belt preform accurately the necessary length to provide accurate similarly in pitch between the cog teeth and the final formed series. Thus, the complete the formation of the belt at this time, the mold plates 66 and 29 are brought into engagement with the outer surfaces of the final portion of the belt preform sections 10a and 10b and the final steps of press-forming and vulcanization is completed, as seen in Figure 7.

Upon completion of the forming of the cogged teeth throughout the length of the belt preform, the belt preform may be removed from the pulleys and individual V-belts cut therefrom as by suitable knives 50 in the conventional manner, as shown in Figure 10, in forming the final raw-edged V-belts 51 having uniform pitch through the length thereof, notwithstanding the substantial length thereof.

As shown in Figure 9, the length of the final unformed portion, such as portion 44 identified as "1", is preferably in the range of approximately 60% to 85% of the length of the cog tooth series formed by the mold plates. Thus, a sufficient amount of material is available for stretching to the final aligned configuration of Figure 6. It has been found that maintaining the stretching factor, as indicated above, produces excellent cog tooth configuration, eliminating the problems of the prior art.

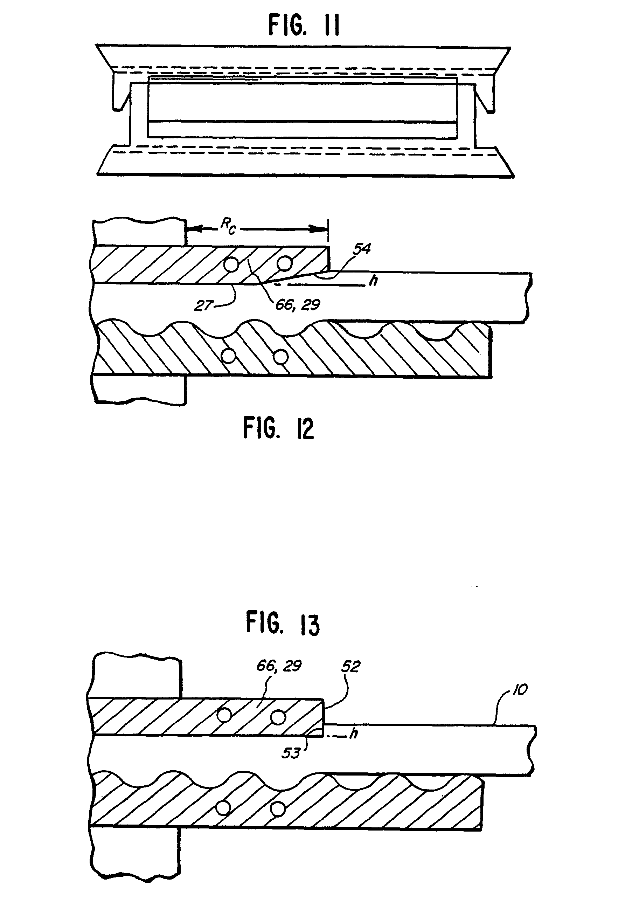

As shown in Figure 13, where the opposite ends 52 of the outer mold plates 66, 29 are perpendicular to the transverse extent of the belt preform 10, a notch mark 53 may be formed as a result of the embedment of the mold plate end portion 52 in the unvulcanized preform material. It has been found that the provision of a bevel, such as bevel 54 illustrated in Figure 12, at the opposite ends of the inner surface 27 of the outer mold plate, effectively eliminates the notch mark 53. In the illustrated embodiment, the height h of the bevel corresponding to the depth of penetration of the mold plate 66, 29 into the unvulcanized belt preform 10 is preferably related to the length $l_c$ of the cooling section by the formula $2h/l_c = .05$ to .40.

Referring now to the embodiment of Figures 14 and 15, a modified form of mold plate structure is illustrated to comprise an inner mold plate 55 and an outer mold plate 56 defining longitudinally extending recesses for receiving individual V-belt preforms cut from the belt preform 10. Thus, mold 55 is provided with a plurality of longitudinally extending side-by-side V-belt receiving grooves 57 and mold plate 56 is provided with a corresponding plurality of pressure surfaces 58 for press-forming the preformed V-belt elements received in the grooves 57 upon association of the upper mold plate 56 with the lower mold plate 55.

Upon completion of the forming of the cog teeth in the final portions of the V-belt preforms, the manufacture of the individual belts is completed. Thus, the final V-belt 59, as shown in Figure 15, will have a constant pitch throughout the length thereof effected in the same manner as discussed above relative to the first embodiment. The difference between the manufacturing operation represented by Figures 14 and 15 and the first described embodiment resides in the slitting of the preform belt element prior to the cog teeth manufacturing steps in lieu of the slitting of the preform band element 10 subsequent to the forming of the cog teeth throughout the length thereof, as described relative to the first embodiment. In all other respects, the manufacture utilizing the molds plates 55 and 56 is similar to the manufacture as described relative to the first embodiment.

Thus, the invention comprehends an improved, simplified manufacture of relatively long cogged tooth power transmission belts and, in particular, raw edge V-belts. The invention comprehends such a manufacture wherein the cogged teeth have a uniform pitch throughout the length of the belt as a result of the novel improved manufacturing process.

**Claims**

1. A method of forming a cogged belt structure comprising the steps of:

(a) extending a continuous looped vulcanizable belt preform element (10) about a pair of axially parallel spaced support members (20, 21);

(b) press-forming a first preselected length portion (10a) of the element (10) disposed between a pair of press-forming members (24, 26) to form a first longitudinally extending series of cogs (45) therein;

(c) vulcanizing the press-formed portion (10a);

(d) advancing the belt to bring a second, similar length portion of the element (10) extending from said first portion to between said press-forming members (24, 26);

(e) press-forming said second length portion to form a second longitudinally extending series of cogs (45) therein continuing from said first series;

(f) vulcanizing the second press-formed portion; and

(g) repeating steps (d), (e) and (f) if necessary until a final unformed portion of the belt extending from the last formed series of cogs and disposed between said support members (20, 21) has a length of approximately 60 to 85% of said preselected length;

characterized by the additional steps of:

(h) clamping the trailing end cogs of said last formed series of cogs (45);

(i) longitudinally stretching said final unformed portion in a direction away from the clamped cogs to cause the cumulative length of the clamped trailing end cogs, the final unformed portion, and a preselected number of cogs adjacent the trailing end of said final deformed portion to have a length substantially equal to said preselected length;

(j) press-forming said stretched final unformed portion to form a final longitudinally extending series of cogs therein to define a continuous series of substantially uniformly spaced cogs along the entire length of said looped element;

(k) vulcanizing the said final series of cogs; and

(l) causing the cogs at the opposite ends of each of the series of cogs formed prior to the forming of the final formed series to be only partially vulcanized during the vulcanization of that series and to have vulcanization thereof completed as an incident of subsequent vulcanization of the series of press-formed cogs adjacent thereto.

2. A method according to claim 1 wherein said press-forming members (24, 26) comprise a pair of cooperating mold plates (36, 66) for press-forming of the element portions (10a) by compression of the element portions (10a) seriatim therebetween.

3. A method according to claim 1 wherein said press-forming members (24, 26) comprise a pair of cooperating mold plates (36, 66) for press-forming of the element portions (10a) by compression of the element portions (10a) seriatim therebetween and means are provided at one end of the mold plates (36, 66) for holding the previously formed cogs adjacent the trailing end of said final unformed portion to maintain said stretched preselected length during the final vulcanization step.

4. A method according to claim 1 wherein the cogs at the opposite ends of each of the series of cogs formed prior to the forming of the final formed series are caused to be only partially vulcanized by subjection thereof to an elevated temperature insufficient to complete vulcanization thereof during the vulcanization of that series and to have vulcanization thereof completed as an incident of subsequent vulcanization of the series of press-formed cogs adjacent thereto.

5. A method according claim 1 wherein said axially parallel spaced support members (20, 21) comprise axially parallel pulleys (20, 21).

6. A method according to claim 1 wherein step (i) of stretching the final unformed portion comprises a step of increasing the spacing between said support members (20, 21).

7. A method according to claim 1 wherein said step (i) of stretching the final unformed portion comprises a step of moving one of the support members (20, 21) for increasing the spacing between said support members (20, 21).

8. A method according to claim 1 wherein a pair of mold plates (36, 66) are provided for press-forming of the element portions (10a) by compression of the portions (10a) seriatim therebetween, one of said mold plates (36, 66) being maintained stationary and the other of the mold plates (36, 66) being moved toward the stationary mold plate (36, 66) to effect the compression of the element portion (10a) therebetween.

9. A method according to claim 1 wherein a pair of mold plates (36, 66) are provided for press-forming of the element portions (10a) by compression of the portions (10a) seriatim therebetween, one of the mold plates (10a) being formed with a series of grooves to define said series of cogs (45) and the other of the mold plates (36, 66) having a length less than said one mold plate (36, 66) whereby an end portion of the adjacent series of cogs (45) may be received in the grooves outboard of said other mold plate (36, 66) during the press-forming and vulcanization of the series of cogs (45) in the portion between the molds (36, 66).

10. A method according to claim 1 wherein said element (10) comprises a sheet of belt-forming material.

11. A method according to claim 1 wherein said element (10) comprises a V-belt preform having a trapezoidal cross section.

12. A method according to claim 1 wherein a plurality of said cogged belt structures is concurrently formed.

13. A method according to claim 1 wherein said element (10) comprises a sheet of belt-forming material and said sheet is longitudinally slit after the vulcanization of said final series of cogs to form a plurality of cogged belts.

14. A method according to claim 1 wherein a pair of mold plates (36, 66) are provided for press-forming of the element portions (10a) by compression of the portions (10a) seriatim therebetween, one of the mold plates (36, 66) being formed with a series of grooves to define on one surface of said element (10) said series of cogs (45) and the other of the mold plates (36, 66) having a length less than said one mold plate (36, 66) whereby an end portion of the adjacent series of cogs (45) may be received in the grooves outboard of said other mold plate (36, 66) during the press-forming and vulcanization of the series of cogs (45) in the portion between the molds (36, 66), the face of said other mold plate (36, 66) being beveled at the longitudinally opposite ends thereof for preventing formation of a stepped mark in the surface of said opposite formed cog one surface.

15. A method according to claim 1 wherein a pair of mold plates (36, 66) are provided for press-forming of the element portions (10a) by compression of the portions (10a) seriatim therebetween, one of the mold plates (36, 66) being formed with a series of grooves to define on one surface of said element (10a) said series of cogs (45) and the other of the mold plates (36, 66) having a length less than said one mold plate (36, 66) wherein an end portion of the adjacent series of cogs (45) may be received in the grooves outboard of said other mold plate (36, 66) during the press-forming and vulcanization of the series of cogs (45) in the portion between the molds (36, 66), the face of said other mold plate (36, 66) being beveled at the longitudinally opposite ends thereof for preventing formation of a stepped mark in the surface of said opposite formed cog one surface, the outboard end of each bevel being defined by a radius of approximately 1 to 8 mm.

16. A method according to claim 1 wherein a pair of mold plates (36, 66) are provided for press-forming of the element portions (10a) by compression of the portions (10a) seriatim therebetween, one of the mold plates (36, 66) being formed with a series of grooves extending said preselected length to define said series of cogs (45) and the other of the mold plates (36, 66) having a length less than said one mold plate (36, 66) whereby an end portion of the adjacent series of cogs (45) may be received in the grooves outboard of said other mold plate (36, 66) during the press-forming and vulcanization of the series of cogs (45) in the portion between the molds, said step (g) of clamping the end of the last previously formed series of cogs adjacent said final unformed portion thereof comprises a step of clamping said end against the outboard grooves to said one mold plate (36, 66).

17. A method according to claim 1 wherein said preselected number of cogs (45) at each of said opposite ends of the final unformed portion is two.

18. A method of forming a cogged belt structure comprising the steps of:

(a) extending a continuous looped vulcanizable belt preform element (10) about a pair of axially parallel spaced support members (20, 21);

(b) press-forming a first preselected length portion (10a) of the element disposed between a pair of press-forming members (24, 26) to form a first longitudinally extending series of cogs (45) therein;

(c) vulcanizing the press-formed portion (10a);

(d) advancing the belt to bring a second, similar length portion of the element (10) extending from said first portion to between said press-forming members (24, 26);

(e) press-forming said second length portion to form a second longitudinally extending series of cogs (45) therein continuing from said first series;

(f) vulcanizing the second press-formed portion;

(g) repeating steps (d), (e) and (f) if necessary until a final unformed portion of the belt extending from the last formed series of cogs and disposed between said support members has a length of less than said preselected length;

characterized by the additional steps of:

(h) clamping the trailing end cogs of said last formed series of cogs (45);

(i) longitudinally stretching said final unformed portion in a direction away from the clamped cogs to cause the cumulative length of the clamped trailing end cogs, the final unformed portion, and a preselected number of cogs adjacent the trailing end of said final deformed portion to have a length substantially equal to said preselected length;

(j) press-forming said stretched final unformed portion to form a final longitudinally extending series of cogs therein to define a continuous series of substantially uniformly spaced cogs along the entire length of said looped element; and

(k) vulcanizing the said final series of cogs, said steps of press-forming comprising providing a pair of mold plates (36, 66) for press-forming of the element portions (10a) by compression of the portions (10a) seriatim therebetween, one of the mold plates (36, 66) being formed with a series of grooves to define one surface of said element (10) said series of cogs (45) and the other of the mold plates (36, 66) having a length less than said one mold plate (36, 66) whereby an end portion of the adjacent series of cogs (45) may be received in the grooves outboard of said other mold plate (36, 66) during the press-forming and vulcanization of the series of cogs (45) in the portion between the molds (36, 66), said mold plate (36, 66) having a cooled portion (40) at the opposite ends thereof, said cooled portion (40) having a preselected length, the face of said other mold plate (36, 66) being beveled at the longitudinally opposite ends thereof for preventing formation of a stepped mark in the surface of said opposite formed cog one surface.

19. A method according to claim 18 wherein the height of said bevel is related to said length of the cooled portion (40) by the relationship:

$$2h = .05 \text{ to } .40,$$
$$\overline{l_c}$$

wherein h = the height and
$l_c$ = length of cooled portion (40).

20. Apparatus for forming a cogged belt structure comprising:

a pair of axially parallel spaced support members (20, 21) about which a continuous looped vulcanizable belt preform element (10) can be extended;

press-forming members (24, 26) for press-forming a first preselected length portion (10a) of the element (10) disposed between the support members (20, 21) to form a first longitudinally extending series of cogs (45) therein;

vulcanizing means for vulcanizing the press-formed portion;

means for moving the element (10) to enable said press-forming members (24, 26) to press-form a second similar length portion of the element (10) extending from the first portion and disposed between the support members (20, 21) to form a second longitudinally extending series of cogs (45) therein continuing from the first series, to enable the vulcanizing means to vulcanize the second press-formed portion, and to enable the repeating of the press-forming and vulcanizing steps by the press-forming members (24, 26) and vulcanizing means until a final unformed portion of the belt (10) extending from the last formed series of cogs (45) and disposed between the support members (20, 21) has a length less than the preselected length;

clamping means (32) for clamping a portion of the element (10) having at least one cog (45) at the trailing end of the last formed series to said members (24, 26) for press-forming said element (10);

means for longitudinally stretching the final unformed portion, characterized in that said means for longitudinally stretching the final unformed portion is a means for longitudinally stretching the final unformed portion away from the clamped cog portion of the element (10) to cause said final unformed portion, a preselected number of previously formed cogs (45) adjacent the opposite end of said final unformed portion, and said clamped cog portion to have a cumulative length substantially equal to said preselected length;

means for causing the press-forming members (24, 26) to press-form the stretched final unformed portion to form a final longitudinally extending series of cogs (45) therein to define a continuous series of substantially uniformly spaced cogs (45) along the entire length of the looped element, and to enable the vulcanizable means to vulcanize the final series of cogs (45); and

means for reducing the vulcanizing effect of the vulcanizing means at the opposite ends of the press-forming members (24, 26) to permit desired vulcanization of the cogs (45) press-formed by said ends to be completed only by a plurality of successive partial vulcanizations.

21. An apparatus according to claim 20 wherein said preselected number of cogs (45) at each of said opposite ends of the final unformed portion is two.

22. An apparatus according to claim 20 or 21 wherein said means for reducing the vulcanizing effect of the vulcanizing means at said opposite ends of the press-forming means comprises means (40) for cooling said opposite ends.

**Patentansprüche**

1. Verfahren zum Herstellen eines Zahnriemens, bei welchem

(a) ein vulkanisierbarer und in sich geschlossener Riemenvorformling (10) um ein Paar axial paralleler und mit Abstand voneinander liegender Stützglieder (20, 21) gelegt wird,

(b) ein erster vorgewählter Längsabschnitt (10a) des Vorformlings (10) zwischen einem Paar von Preßformen (24, 26) unter Ausbildung einer sich darin in Längsrichtung erstreckenden ersten Peihe von Zähnen (45) durch Pressen verformt wird,

(c) der durch Pressen verformte Längsabschnitt (10a) vulkanisiert wird,

(d) der Riemen vorgeschoben wird bis sich ein ähnlicher zweiter Längsabschnitt des Vorformlings (10) vom ersten Längsabschnitt bis zwischen die Preßformen (24, 26) erstreckt,

(e) dieser zweite Längsabschnitt unter Ausbildung einer zweiten sich in Längsrichtung erstreckenden Reihe von Zähnen (45) durch Pressen verformt wird und sich diese zweite Zahnreihe ausgehend von der ersten Zahnreihe erstreckt,

(f) der zweite durch Pressen verformte Längsabschnitt vulkanisiert wird und

(g) die Arbeitsgänge (d), (e) und erforderlichenfalls (f) wiederholt werden bis ein sich von der zuletzt ausgebildeten Zahnreihe erstreckender und zwischen den Stützgliedern (20, 21) liegender letzter, nicht verformter Abschnitt des Riemens eine Länge von etwa 60 bis 85 % der vorgewählten Länge besitzt,

gekennzeichnet durch die zusätzlichen Arbeitsgänge des

(h) Einspannens der Zähne am hinteren Ende der zuletzt ausgebildeten Reihe von Zähnen (45),

(i) Streckens des letzten nicht verformten Längsabschnittes in Längsrichtung von den eingespannten Zähnen weg bis die Länge der eingespannten Zähne am hinteren Ende, des letzten nicht verformten Längsabschnittes und einer vorgewählten Zahl von dem hinteren Ende des zuletzt verformten Längsabschnittes benachbarten Zähnen insgesamt im wesentlichen gleich ist der erwähnten vorgewählten Länge,

(j) Verformens durch Pressen des gestreckten letzten nicht verformten Längsabschnittes unter Ausbildung einer letzten sich in Längsrichtung erstreckenden Reihe von Zähnen darin, um über die gesamte Länge des in sich geschlossenen Riemenvorformlings eine durchgehende Reihe von im wesentlichen gleichen Abstand voneinander besitzenden Zähnen auszubilden, und

(k) Vulkanisierens dieser letzten Reihe von Zähnen, wobei

(l) dafür gesorgt wird, daß die Zähne an den gegenüberliegenden Enden einer jeder der vor dem Ausbilden der letzten Zahnreihe ausgebildeten Zahnreihen während des Vulkanisierens dieser Zahnreihen nur teilweise vulkanisiert werden und das Vulkanisieren derselben gelegentlich des Vulkanisierens der benachbart hiezu liegenden Reihe von durch Pressen ausgebildeten Zähnen vervollständigt wird.

2. Verfahren nach Anspruch 1, worin die Preßformen (24, 26) ein Paar miteinander zusammenwirkender Formplatten (36, 66) zum Verformen der Vorformlingsabschnitte (10a) unter Druck durch aufeinanderfolgendes Pressen der Vorformlingsabschnitte (10a) zwischen den Formplatten aufweist.

3. Verfahren nach Anspruch 1, worin die Preßformen (24, 26) ein Paar miteinander zusammenwirkender Formplatten (36, 66) zum Verformen der Vorformlingsabschnitte (10a) unter Druck durch aufeinanderfolgendes Pressen der Vorformlingsabschnitte (10a) zwischen den Formplatten aufweist, wobei an einem Ende der Formplatten (36, 66) Einrichtungen zum Haltern der zuvor ausgebildeten Zähne angrenzend an das hintere Ende des zuletzt nicht verformten Längsabschnittes vorgesehen sind, um die erwähnte gestreckte vorgewählte Länge während des letzten Vulkanisierschrittes beizubehalten.

4. Verfahren nach Anspruch 1, worin die an gegenüberliegenden Enden einer jeden der vor dem Ausbilden der zuletzt ausgebildeten Reihe von Zähnen ausgebildeten Zahnreihe dadurch nur teilweise vulkanisiert werden, daß sie während des Vulkanisierens dieser Zahnreihen auf eine für das vollständige Vulkanisieren nicht ausreichende erhöhte Temperatur gebracht werden, wobei das Vulkanisieren derselben gelegentlich des anschließenden Vulkanisierens der benachbart hiezu liegenden Reihe von durch Pressen ausgebildeten Zähnen vervollständigt wird.

5. Verfahren nach Anspruch 1, worin die axial parallelen und mit Abstand voneinander liegenden Stützglieder (20, 21) Riemenscheiben (20, 21) mit zueinander parallelen Achsen aufweisen.

6. Verfahren nach Anspruch 1, worin beim Arbeitsgang (i) des Streckens des letzten nicht verformten Längsabschnittes der Abstand zwischen den Stützgliedern (20, 21) vergrößert wird.

7. Verfahren nach Anspruch 1, worin beim Arbeitsgang (i) des Streckens des letzten nicht verformten Abschnittes eines der Stützglieder (20, 21) zwecks Vergrößerung des Abstandes zwischen den Stützgliedern (20, 21) bewegt wird.

8. Verfahren nach Anspruch 1, worin ein Paar von Formplatten (36, 66) zum Verformen der Vorformlingsabschnitte (10a) unter Druck durch aufeinanderfolgendes Pressen der Vorformlingsabschnitte (10a) zwischen den Formplatten vorgesehen ist, wobei eine der Formplatten (36, 66) ortsfest gehalten und die andere der Formplatten (36, 66) in Richtung zur ortsfesten Formplatte (36, 66) zugestellt wird, um den Vorformlingsabschnitt (10a) zwischen beiden zu verpressen.

9. Verfahren nach Anspruch 1, worin ein Paar von Formplatten (36, 66) zum Verformen der Vorformlingsabschnitte (10a) unter Druck durch aufeinanderfolgendes Pressen der Vorformlingsabschnitte (10a) zwischen den Formplatten vorgesehen ist, wobei eine der Formplatten (36, 66) eine die Reihe von Zähnen (45) definierende Reihe von Nuten aufweist und die andere der Formplatten (36, 66) eine geringere Länge besitzt als die erwähnte eine Formplatte (36, 66), womit ein Endabschnitt der benachbarten Reihen von Zähnen (45) während des Verformens durch Pressen und des Vulkanisierens der Reihe von Zähnen (45) im zwischen den Formplatten (36, 66) liegenden Längsabschnitt in den außerhalb der erwähnten anderen Formplatte (36, 66) gelegenen Nuten aufgenommen werden kann.

10. Verfahren nach Anspruch 1, worin der Riemenvorformling (10) ein Fell aus riemenbildendem Material aufweist.

11. Verfahren nach Anspruch 1, worin der Riemenvorformling (10) einen Keilriemenvorformling trapezartigen Querschnitts aufweist.

12. Verfahren nach Anspruch 1, worin mehrere dieser Zahnriemen gleichzeitig ausgebildet werden.

13. Verfahren nach Anspruch 1, worin der Riemenvorformling (10) ein Fell aus riemenbildendem Material aufweist und das Fell nach dem Vulkanisieren der letzten Reihe von Zähnen zwecks Herstellung mehrerer Zahnriemen in Längsrichtung geschlitzt wird.

14. Verfahren nach Anspruch 1, worin ein Paar von Formplatten (36, 66) zum Verformen der Vorformlingsabschitte (10a) unter Druck durch aufeinanderfolgendes Pressen der Vorformlingsabschnitte (10a) zwischen den Formplatten vorgesehen ist, wobei eine der Formplatten (36, 66) mit einer Reihe von an einer Fläche des Vorformlings (10) die Reihe von Zähnen (45) definierenden Reihe von Nuten versehen ist und die andere der Formplatten (36, 66) eine geringere Länge besitzt als die erwähnte eine Formplatte (36, 66), womit ein Endabschnitt der benachbarten Reihe von Zähnen (45) während des Verformens durch Pressen und des Vulkanisierens der Reihe von Zähnen (45) im zwischen den Formplatten (36, 66) liegenden Längsabschnitt in den außerhalb der erwähnten anderen Formplatte (36, 66) gelegenen Nuten aufgenommen werden kann, wobei die Fläche der erwähnten anderen Formplatte (36, 66) an ihren in Längsrichtung einander gegenüberliegenden Enden abgeschrägt ist, um das Entstehen einer Abstufung in der, der die Zähne tragenden Fläche gegenüberliegenden Fläche zu verhindern.

15. Verfahren nach Anspruch 1, worin ein Paar von Formplatten (36, 66) zum Verformen der Vorformlingsabschnitte (10a) unter Druck durch aufeinanderfolgendes Pressen der Vorformlingsabschnitte (10a) vorgesehen ist, wobei eine der Formplatten (36, 66) mit einer Reihe von an einer Fläche des Vorformlings (10) die Reihe von Zähnen (45) definierenden Reihe von Nuten versehen ist und die andere der Formplatten (36, 66) eine geringere Länge besitzt als die erwähnte andere Formplatte (36, 66), wobei ein Endabschnitt der benachbarten Reihen von Zähnen (45) während des Verformens durch Pressen und des Vulkanisierens der Reihe von Zähnen (45) im zwischen den Formplatten (36, 66) liegenden Längsabschnitt in den außerhalb der erwähnten anderen Formplatte (36, 66) gelegenen Nuten aufgenommen werden kann und wobei die Fläche der erwähnten anderen Formplatte (36, 66) an ihren in Längsrichtung gegenüberliegenden Enden abgeschrägt ist, um das Entstehen einer Abstufung in der der die Zähne tragenden Fläche gegenüberliegenden Fläche zu vermeiden und wobei die äußeren Enden einer jeden Abschrägung durch einen Radius von etwa 1 bis 8 mm definiert sind.

16. Verfahren nach Anspruch 1, worin ein Paar von Formplatten (36, 66) zum Verformen der Vorformlingsabschnitte (10a) unter Druck durch aufeinanderfolgendes Pressen der Vorformlingsabschnitte (10a) zwischen den Formplatten vorgesehen ist, wobei eine der Formplatten (36, 66) mit einer die Reihe von Zähnen (45) definierenden und sich über die vorgewählte Länge erstreckenden Reihe von Nuten versehen ist und die andere der Formplatten (36, 66) eine geringere Länge besitzt als die erwähnte eine Formplatte (36, 66), womit ein Endabschnitt der benachbarten Reihen von Zähnen (45) während des Verformens durch Pressen und des Vulkanisierens der Reihe von Zähnen im zwischen den Formplatten liegenden Längsabschnitt in den außerhalb der erwähnten anderen Formplatte (36, 66) gelegenen Nuten aufgenommen werden kann, wobei der Arbeitsgang (g) des Einspannens des Endes der zuletzt vorher ausgebildeten Reihe von Zähnen benachbart des letzten nicht verformten Längsabschnittes einen Arbeitsgang des Einspannens dieses einen Endes gegen die äußeren Nuten der erwähnten einen Formplatte (36, 66) umfaßt.

17. Verfahren nach Anspruch 1, worin die vorgewählte Anzahl von Zähnen (45) an jedem der erwähnten gegenüberliegenden Enden des zuletzt nicht verformten Längsabschnittes gleich ist zwei.

18. Verfahren nach Anspruch 1, bei welchem

(a) ein vulkanisierbarer und in sich geschlossener Riemenvorformling (10) um ein Paar axial paralleler und mit Abstand voneinander liegender Stützglieder (20, 21) gelegt wird,

(b) ein erster vorgewählter Längsabschnitt (10a) des Vorformlings zwischen einem Paar von Preßformen (24, 26) unter Ausbildung einer sich darin in Längsrichtung erstreckenden ersten Reihe von Zähnen (45) durch Pressen verformt wird,

(c) der durch Pressen verformte Längsabschnitt (10a) vulkanisiert wird,

(d) der Riemen vorgeschoben wird, bis sich ein ähnlicher zweiter Längsabschnitt des Vorformlings (10) vom ersten Längsabschnitt bis zwischen die Preßformen (24, 26) erstreckt,

(e) dieser zweite Längsabschnitt unter Ausbildung einer zweiten sich in Längsrichtung erstreckenden Reihe von Zähnen (45) durch Pressen verformt wird und sich diese zweite Zahnreihe ausgehend von der ersten Zahnreihe erstreckt,

(f) der zweite durch pressen verformte Längsabschnitt vulkanisiert wird und

(g) die Arbeitsgänge (d), (e) und erforderlichenfalls (f) wiederholt werden, bis ein sich von der zuletzt ausgebildeten Zahnreihe erstreckender und zwischen den Stützgliedern liegender letzter nicht verformter Abschnitt eine geringere Länge besitzt als die erwähnte vorgewählte Länge,

gekennzeichnet durch die zusätzlichen Arbeitsgänge des

(h) Einspannens der Zähne am hinteren Ende der zuletzt ausgebildeten Reihe von Zähnen (45),

(i) Streckens des letzten nicht verformten Längsabschnittes in Längsrichtung von den eingespannten Zähnen weg bis die Länge der eingespannten Zähne am hinteren Ende, des letzten nicht verformten Längsabschnittes und einer vorgewählten Zahl von dem hinteren Ende des zuletzt verformten Längsabschnittes benachbarten Zähnen insgesamt im wesentlichen gleich ist der erwähnten vorgewählten Länge,

(j) Verformens durch Pressen des letzten nicht verformten Längsabschnittes unter Ausbildung einer letzten sich in Längsrichtung erstreckenden Reihe von Zähnen darin, um über die gesamte Länge des in sich geschlossenen Riemenvorformlings eine durchgehende Reihe von im wesentlichen gleichen Abstand voneinander besitzenden Zähnen auszubilden, und

(k) Vulkanisierens der erwähnten letzten Reihe von Zähnen, wobei die Arbeitsgänge des Verformens durch Pressen vorsehen ein Paar von Formplatten (36, 66) zum Verformen der Vorformlingsabschnitte (10a) unter Druck durch aufeinanderfolgendes Pressen der Vorformlingsabschnitte (10a) zwischen den Formplatten bereitzustellen, wobei eine der Formplatten (36, 66) mit einer Reihe von in einer Fläche des Vorformlings (10) die Anzahl von Zähnen (45) definierenden Nuten ausgestattet ist und die andere der Formplatten (36, 66) eine geringere Länge besitzt als die erwähnte eine Formplatte (36, 66), womit ein Endabschnitt der benachbarten Reihen von Zähnen (45) während des Verformens durch Pressen und des Vulkanisierens der Reihe von Zähnen (45) im zwischen den Formplatten liegenden Längsabschnitt in den außerhalb der erwähnten anderen Formplatte (36, 66) gelegenen Nuten aufgenommen werden kann, und wobei die erwähnte Formplatte (36, 66) an ihren gegenüberliegenden Enden einen gekühlten Abschnitt (40) vorbestimmter Länge aufweist und die Fläche der erwähnten anderen Formplatte (36, 66) an ihren in Längsrichtung gegenüberliegenden Enden abgeschrägt ist, um das Entstehen einer Abstufung in der der die Zähne tragenden Fläche gegenüberliegenden Fläche zu vermeiden.

19. Verfahren nach Anspruch 18, worin die erwähnte Abschrägung mit der Länge des gekühlten Abschnittes (40) durch die Beziehung

$$2h = 0,05 \text{ bis } 0,40,$$
$$\overline{l_c}$$

verknüpft ist, worin
h = die Höhe und
$l_c$ = Länge des gekühlten Abschnittes (40).

20. Vorrichtung zum Herstellen eines Zahnriemens mit

einem Paar axial paralleler und mit Abstand voneinander liegenden Stützgliedern (20, 21), um welche ein in sich geschlossener vulkanisierbarer Riemenvorformling (10) gelegt werden kann,

Preßformen (24, 26) zum Verformen unter Pressen eines ersten vorgewählten und zwischen den Stützgliedern (20, 21) liegenden Längsabschnittes (10a) des Vorformlings (10) zwecks Ausbildung einer sich in Längsrichtung erstreckenden ersten Reihe von Zähnen (45) darin,

einer Vulkanisiereinrichtung zum Vulkanisieren des durch Pressen verformten Längsabschnittes,

einer Einrichtung zum Bewegen des Vorformlings (10), um die Preßformen (24, 26) in die Lage zu versetzen einen sich vom ersten Längsabschnitt erstreckenden und zwischen den Stützgliedern (20, 21) befindlichen ähnlichen zweiten Längsabschnitt des Vorformlings (10) unter Ausbildung einer zweiten sich in Längsrichtung erstreckenden Reihe von Zähnen (45) unter Druck zu verformen, die die erste Zahnreihe fortsetzt, und um die Vulkanisiereinrichtung in die Lage zu versetzen den zweiten durch Pressen verformten Längsabschnitt zu vulkanisieren, und um ein Wiederholen des Verformens unter Druck und der Vulkanisierungsschritte durch die Preßformen (24, 26) und die Vulkanisiereinrichtung zu ermöglichen bis ein letzter nicht verformter, von der zuletzt ausgebildeten Reihe von Zähnen (45) ausgehender und zwischen den Stützgliedern (20, 21) liegender Längsabschnitt des Riemens (10) eine geringere Länge besitzt als die vorgewählte Länge,

einer Einspanneinrichtung (32) zum Einspannen eines zumindest einen Zahn (45) aufweisenden Abschnittes am hinteren Ende der zuletzt ausgebildeten Zahnreihe des Vorformlings (10) zwischen den Preßformen (24, 26) zum Verformen des Vorformlings (10) unter Druck,

einer Einrichtung zum Strecken des letzten nicht verformten Abschnittes in Längsrichtung, dadurch gekennzeichnet, daß die Einrichtung zum Strecken des letzten nicht verformten Längsabschnittes in Längsrichtung eine Einrichtung zum Strecken des letzten nicht verformten Längsabschnittes in Längsrichtung vom eingespannten Zahnabschnitt des Vorformlings (10) weg ist, um zu bewirken, daß der erwähnte nicht verformte Abschnitt, eine vorgewählte Anzahl von dem gegenüberliegenden Ende des zuletzt nicht verformten Abschnittes benachbarten und zuvor ausgebildeten Zähnen (45) und der eingespannte Zahnabschnitt eine der erwähnten vorgewählten Länge im wesentlichen gleiche Länge besitzen, wobei

Einrichtungen vorgesehen sind, die bewirken, daß die Preßformen (24, 26) den gestreckten letzten nicht verformten Abschnitt unter Ausbildung einer letzten sich in Längsrichtung erstreckenden Reihe von Zähnen (45) unter Druck verpressen, um über die gesamte Länge des in sich geschlossenen Vorformlings eine ununterbrochene Reihe von im wesentlichen gleichen Abstand voneinander besitzenden Zähnen (45) auszubilden und daß die Vulkanisiereinrichtung die letzte Reihe von Zähnen (45) vulkanisiert, und

Einrichtungen zum Verringern des Vulkanisiereffekts der Vulkanisiereinrichtung an gegenüberliegenden Enden der Preßformen (24, 26) vorgesehen sind, um zu ermöglichen, daß die gewünschte Vulkanisation der von diesen Enden unter Druck verformten Zähne (45) nur durch mehrere aufeinanderfolgende Teilvulkanisationen vervollständigt wird.

21. Vorrichtung nach Anspruch 20, worin die erwähnte vorgewählte Anzahl von Zähnen (45) an jedem der erwähnten gegenüberliegenden Enden des zuletzt nicht verformten Abschnitts gleich ist zwei.

22. Vorrichtung nach Anspruch 20 oder 21, worin die Einrichtung zum Verringern des Vulkanisiereffekts der Vulkanisiereinrichtung an gegenüberliegenden Enden der Preßformen Einrichtungen (40) zum Kühlen dieser gegenüberliegenden Enden aufweist.

**Revendications**

1. Procédé de formation d'une structure de courroie crantée, comprenant les étapes suivantes:

(a) la disposition d'un élément en boucle continue (10) constituant une préforme vulcanisable de courroie autour de deux organes distants (20, 21) de support, parallèles axialement,

(b) la mise en forme par compression d'une première partie (10a) de longueur prédéterminée de l'élément (10), placée entre deux organes (24, 26) de mise en forme par compression de manière qu'une première série longitudinale de dents (45) soit formée,

(c) la vulcanisation de la partie mise en forme par compression (10a),

(d) l'avance de la courroie afin qu'une seconde partie de longueur semblable de l'élément (10) prolongeant la première partie soit placée entre les organes de mise en forme par compression (24, 26),

(e) la mise en forme par compression de la seconde partie afin qu'une seconde série longitudinale de dents (45) prolongeant la première série soit formée,

(f) la vulcanisation de la seconde partie mise en forme par compression, et

(g) la répétition des étapes (d), (e) et (f) le cas échéant jusqu'à ce qu'une partie finale de la courroie non mise en forme, partant de la dernière série de dents, formée et placée entre les organes de support (20, 21), ait une longueur comprise entre environ 60 et 85 % de ladite longueur prédéterminée,

caractérisée par les étapes suivantes:

(h) le serrage des dents de l'extrémité postérieure de la dernière série formée de dents (45),

(i) l'étirage longitudinal de la partie finale non formée en direction l'écartant des dents serrées de manière que la longueur cumulée des dents serrées de l'extrémité postérieure, de la partie finale non mise en forme et d'un nombre prédéterminé de dents adjacentes à l'extrémité postérieure de la partie finale déformée soit sensiblement égale à ladite longueur prédéterminée,

(j) la mise en forme par compression de la partie finale étirée non mise en forme afin qu'une série longitudinale finale de dents y soit formée et afin qu'une série continue de dents ayant un espacement pratiquement uniforme soit réalisée sur toute la longueur de l'élément en forme de boucle,

(k) la vulcanisation de la série finale de dents, et

(l) la vulcanisation seulement partielle des dents placées aux extrémités opposées de chacune des séries de dents, formées avant la formation de la série finale, au cours de la vulcanisation de la série correspondante, et la fin de la vulcanisation lors de la vulcanisation de la série suivante de dents formées par compression et qui sont adjacentes à cette série.

2. Procédé selon la revendication 1, dans lequel les organes (24, 26) de mise en forme par compression comporte deux plaques coopérantes de moulage (36, 66) destinées à la mise en forme des parties (10a) d'élément par compression des parties (10a) d'élément en série entre ces plaques.

3. Procédé selon la revendication 1, dans lequel les organes (24, 26) de mise en forme par compression comportent une paire de plaques coopérantes de moulage (36, 66) destinées à mettre les parties d'élément (10a) en forme par compression de ces parties d'élément (10a) en série entre ces plaques, et un dispositif est placé à une première extrémité des plaques de moulage (36, 66) afin qu'il retienne les dents formées antérieurement à proximité de l'extrémité postérieure de la partie finale non mise en forme afin que la longueur prédéterminée obtenue par étirage soit conservée pendant l'étape de vulcanisation finale.

4. Procédé selon la revendication 1, dans lequel les dents des extrémités opposées de chacune des séries de dents formées avant la formation de la série finale sont vulcanisées seulement en partie par application à ces dents d'une température élevée qui ne suffit pas pour leur vulcanisation totale pendant leur vulcanisation et leur vulcanisation est terminée lors de la vulcanisation ultérieure de la série de dents formées par compression qui leur est adjacente.

5. Procédé selon la revendication 1, dans lequel les organes distants de support (20, 21) qui sont axialement parallèles comportent des poulies (20, 21) d'axes parallèles.

6. Procédé selon la revendication 1, dans lequel l'étape (i) d'étirage de la partie finale non mise en forme comporte une étape d'augmentation de l'espacement des organes de support (20, 21).

7. Procédé selon la revendication 1, dans lequel l'étape (i) d'étirage de la partie finale non mise en forme comporte une étape de déplacement de l'un des organes de support (20, 21) afin que la distance comprise entre les organes de support (20, 21) soit accrue.

8. Procédé selon la revendication 1, dans lequel deux plaques de moulage (36, 66) sont destinées à mettre les parties d'élément (10a) en forme par compression en série de ces parties (10a) entre elles, l'une des plaques de moulage (36, 66) étant maintenue fixe et l'autre des plaques de moulage (36, 66) étant déplacée vers la plaque fixe (36, 66) de moulage afin que la partie d'élément (10a) placée entre elles, soit comprimée.

9. Procédé selon la revendication 1, dans lequel deux plaques de moulage (36, 66) sont destinées à mettre les parties d'élément (10a) en forme par compression de ces parties (10a) en série entre elles, l'une des plaques de moulage (10a) ayant une série de gorges destinée à délimiter la série de dents (45) et l'autre des plaques de moulage (36, 66) ayant une longueur inférieure à celle de la première plaque de moulage (36, 66) si bien qu'une partie d'extrémité de la série adjacente de dents (45) peut être logée dans des gorges qui se trouvent à l'extérieur de l'autre plaque de moulage (36, 66) pendant la mise en forme par compression et la vulcanisation de la série de dents (45) se trouvant dans la partie comprise entre les moules (36, 66).

10. Procédé selon la revendication 1, dans lequel ledit élément (10) est une feuille d'un matériau de mise en forme de courroie.

11. Procédé selon la revendication 1, dans lequel ledit élément (10) est une préforme de courroie trapézoïdale ayant une section trapézoïdale.

12. Procédé selon la revendication 1, dans lequel plusieurs structures de courroie crantée sont formées simultanément.

13. Procédé selon la revendication 1, dans lequel ledit élément (10) est une feuille d'un matériau de formation de courroie et la feuille est fendue longitudinalement après la vulcanisation de la série finale de dents de manière que plusieurs courroies crantées soient formées.

14. Procédé selon la revendication 1, dans lequel deux plaques de moulage (36, 66) sont destinées à assurer la mise des parties d'élément (10a) en forme par compression de ces parties (10a) en série entre ces plaques, l'une des plaques de moulage (36, 66) ayant une série de gorges destinée à délimiter, sur une première surface dudit élément (10), la série de dents (45), et l'autre des plaques de moulage (36, 66) ayant une longueur inférieure à celle de la première plaque de moulage (36, 66), si bien qu'une partie d'extrémité de la série adjacente de dents (45) peut se loger dans les gorges qui se trouvent à l'extérieur de l'autre plaque de moulage (36, 66) pendant la mise en forme par compression et la vulcanisation de la série de dents (45) qui se trouve dans la partie comprise entre les moules (36, 66), la face de l'autre plaque de moulage (36, 66) étant chanfreinée à ses extrémités longitudinalement opposées afin qu'une marque de gradin ne puisse pas être formée à la surface opposée à celle sur laquelle sont formées les dents.

15. Procédé selon la revendication 1, dans lequel deux plaques de moulage (36, 66) sont destinées à assurer la mise des parties d'éléments (10a) en forme par compression de ces parties (10a) en série entre ces plaques, une première des plaques de moulage (36, 66) étant formée avec une série de gorges destinée à délimiter, sur une première surface de l'élément (10a), la série de dents (45), et l'autre des plaques de moulage (36, 66) ayant une longueur inférieure à celle de la première plaque de moulage (36, 66), une partie d'extrémité de la série adjacente de dents (45) pouvant se loger dans les gorges qui se trouvent à l'extérieur de l'autre plaque de moulage (36, 66) pendant la mise en forme par compression et la vulcanisation de la série de dents (45) se trouvant dans la partie comprise entre les moules (36, 66), la face de l'autre plaque de moulage (36, 66) étant chanfreinée à ses extrémités longitudinalement opposées afin qu'une marque de gradin ne puisse pas se former à la surface opposée à la surface ayant les dents, l'extrémité externe de chaque chanfrein étant délimitée par un rayon d'environ 1 à 8 mm.

16. Procédé selon la revendication 1, dans lequel deux plaques de moulage (36, 66) sont destinées à la mise des parties d'élément (10a) en forme par compression de ces parties (10a) en série entre elles, une première des plaques de moulage (36, 66) étant formée avec une série de gorges disposée sur la longueur prédéterminée et destinée à délimiter la série de dents (45), et l'autre des plaques de moulage (36, 66) ayant une longueur inférieure à celle de la première plaque de moulage (36, 66), si bien qu'une partie d'extrémité de la série adjacente de dents (45) peut se loger dans les gorges se trouvant à l'extérieur de l'autre plaque de moulage (36, 66) pendant la mise en forme par compression et la vulcanisation de la série de dents (45) dans la partie comprise entre les moules, et l'étape (g) de serrage de l'extrémité de la série de dents formée en dernier et adjacente à la partie finale non mise en forme comprend une étape de serrage de cette extrémité contre les gorges externes, vers la première plaque de moulage (36, 66).

17. Procédé selon la revendication 1, dans lequel le nombre prédéterminé de dents (45) de chacune des extrémités opposées de la partie finale non mise en forme est égal à deux.

18. Procédé de formation d'une structure de courroie crantée, comprenant les étapes suivantes:

(a) la disposition d'un élément en boucle continue (10) constituant une préforme vulcanisable de courroie autour de deux organes distants de support (20, 21) axialement parallèles,

(b) la mise en forme par compression d'une première partie (10a) de longueur prédéterminée de l'élément placée entre deux organes (24, 26) de mise en forme par compression afin qu'une première série longitudinale de dents (45) soit formée,

(c) la vulcanisation de la partie mise en forme par compression (10a),

(d) l'avance de la courroie afin qu'une seconde partie de l'élément (10), de longueur semblable à celle de la première partie et la prolongeant, soit mise entre les organes (24, 26) de mise en forme par compression,

(e) la mise en forme par compression de la seconde partie afin qu'une seconde série longitudinale de dents (45) soit formée à l'intérieur et prolonge la première série,

(f) la vulcanisation de la seconde partie mise en forme par compression, et

(g) la répétition des étapes (d), (e) et (f) le cas échéant jusqu'à ce qu'une partie finale non mise en forme de la courroie, prolongeant la dernière série de dents formée et placée entre les organes de support, ait une longueur inférieure à ladite longueur prédéterminée,

caractérisé par les étapes supplémentaires suivantes:

(h) le serrage des dents de l'extrémité postérieure de la dernière série de dents formée (45),

(i) l'étirage longitudinal de la partie finale non mise en forme afin qu'elle soit écartée des dents serrées de manière que la longueur cumulée des dents serrées de l'extrémité postérieure, de la partie finale non mise·en forme et d'un nombre prédéterminè de dents adjacentes à l'extrémité postérieure de la partie finale non mise en forme soit pratiquement égale à ladite longueur prédéterminée,

(j) la mise en forme par compression de la partie finale non mise en forme et étirée de manière qu'une série finale de dents, disposées longitudinalement y soit formée et qu'une série continue de dents d'espacement pratiquement uniforme soit formée sur toute la longueur de l'élément en boucle, et

(k) la vulcanisation de la série finale de dents, les étapes de mise en forme par compression comprenant la disposition de plaques de moulage (36, 66) destinées à la mise des parties d'élément (10a) en forme par compression des parties (10a) en série entre ces plaques, l'une des plaques de moulage (36, 66) ayant une série de gorges destinée à délimiter, sur une première surface de l'élément (10), la série de dents (45), et l'autre des plaques de moulage (36, 66) ayant une longueur inférieure à celle de la première plaque de moulage (36, 66), si bien qu'une partie d'extrémité de la série adjacente de dents (45) peut se loger dans les gorges se trouvant à l'extérieur de l'autre plaque de moulage (36, 66) pendant la mise en forme par compression, et la vulcanisation de la série de dents (45) se trouvant dans la partie comprise entre les moules (36, 66), la plaque de moulage (36, 66) ayant une partie refroidie (40) à ses extrémités opposées, la partie refroidie (40) ayant une longueur prédéterminée, la face de l'autre plaque de moulage (36, 66) étant chanfreinée à ses extrémités longitudinalement opposées de manière qu'une marque de gradin ne puisse pas se former à la surface opposée à la surface portant les dents.

19. Procédé selon la revendication 18, dans lequel la hauteur du chanfrein est reliée à la longueur de la partie refroidie (40) par la relation:

$$2h/l_c = 0,05 \text{ à } 0,40$$

h étant la hauteur et $l_c$ êtant la longueur de la partie refroidie (40).

20. Appareil de formation d'une structure de courroie crantée, comprenant:

deux organes distants de support (20, 21), axialement parallèles et autour desquels un élément en boucle continue (10) d'une préforme vulcanisable de courroie peut être placé,

des organes (24, 26) de mise en forme par compression destinés à mettre en forme par compression une première partie (10a) de longueur prédéterminée de l'élément (10), disposée entre les organes de support (20, 21) afin qu'une première série longitudinale de dents (45) soit formée,

un dispositif de vulcanisation de la partie mise en forme par compression,

un dispositif destinè à déplacer l'élément (10) afin que les organes (24, 26) de mise en forme par compression puissent mettre en forme par compression une seconde partie de l'élément (10) de longueur semblable, partant de la première partie et placée entre les organes de support (20, 21) afin qu'une seconde série longitudinale de dents (45) soit formée, dans le prolongement de la première série, et afin que le dispositif de vulcanisation puisse vulcaniser la seconde partie mise en forme par compression et que les étapes de mise en forme par compression et de vulcanisation puissent être répétées par les organes de mise en forme par compression (24, 26) et le dispositif de vulcanisation jusqu'à ce qu'une partie finale non mise en forme de la courroie (10), prolongeant la dernière série de dents (45) formée et disposée entre les organes de support (20, 21), ait une longueur inférieure à la longueur prédéterminée,

un dispositif (32) de serrage d'une partie de l'élément (10) ayant au moins une dent (45) à l'extrémité postérieure de la dernière série formée contre lesdits organes (24, 26) de mise en forme dudit élément (10) par compression, et

un dispositif destiné à étirer longitudinalement la partie finale non mise en forme,

caractérisé en ce que le dispositif destiné à étirer longitudinalement la partie finale non mise en forme est un dispositif destiné à étirer longitudinalement la partie finale non mise en forme en l'écartant de la partie serrée de l'élément (10) de manière que la partie finale non mise en forme, un nombre prédéterminé de dents (45) formées antérieurement près de l'extrémité opposée de la partie finale non mise en forme, et la partie serrée à dents aient une longueur cumulée sensiblement égale à la longueur prédéterminée,

un dispositif destiné à provoquer la mise en forme par compression, par les organes (24, 26) de mise en forme par compression, de la partie finale étirée et non mise en forme de manière qu'une série longitudinale finale de dents (45) y soit formée et qu'une série continue de dents (45) d'espacement sensiblement uniforme soit formée sur toute la longueur de l'élément en forme de boucle, et que le dispositif de vulcanisation vulcanise la série finale de dents (45), et

un dispositif destiné à réduire l'effet de vulcanisation du dispositif de vulcanisation aux extrémités opposées des organes (24, 26) de mise en forme par compression afin que la vulcanisation voulue des dents (45) mises en forme par compression aux extrémités ne soit terminée qu'à la suite de plusieurs vulcanisations partielles successives.

21. Appareil selon la revendication 20, dans lequel le nombre prédéterminé de dents (45) de chaque extrémité opposée de la partie finale non mise en forme est égal à deux.

22. Appareil selon la revendication 20 ou 21, dans lequel le dispositif destiné à réduire l'effet de vulcanisation du dispositif de vulcanisation aux extrémités opposées du dispositif de mise en forme par compression comporte un dispositif (40) de refroidissement des extrémités opposées.

FIG. I

2

2

11

10

12

15

13

18

14

16

17

19

FIG. 2

10

FIG. 3

28    66    38    24    27    28    33

32                              10a    10

20                                        21

40                                        40

40    41    37    36    26    41

23                                        39    22

10b    34                          35

31    29    25    30    31

1

FIG. 4

FIG. 5

FIG. 6

FIG. 7

FIG. 14

FIG. 15

FIG. 8

FIG. 9

FIG. 10

# FIG. 11

# FIG. 12

# FIG. 13